# EUROPEAN PATENT SPECIFICATION

(11) **EP 3 176 417 B1**
(45) Date of publication and mention of the grant of the patent: **18.09.2019**
(21) Application number: 15829385.2
(22) Date of filing: 24.04.2015
(51) Int. Cl.: F02M 25/08, F02D 41/00, F02M 35/16, F02M 35/10, F02D 9/10

(54) **ENGINE UNIT AND SADDLED VEHICLE**
MOTOREINHEIT UND SATTELFAHRZEUG
UNITÉ DE MOTEUR ET VÉHICULE À SELLE

(30) Priority: 08.08.2014 JP 2014163074
(43) Date of publication of application: 07.06.2017
(73) Proprietor: Yamaha Hatsudoki Kabushiki Kaisha, Iwata-shi, Shizuoka 438-8501 (JP)
(72) Inventor: HARA, Takahiko, Iwata-shi Shizuoka 438-8501 (JP); WATANABE, Yuichiro, Iwata-shi Shizuoka 438-8501 (JP); OKUWA, Yoshinori, Iwata-shi Shizuoka 438-8501 (JP)
(74) Representative: Zimmermann, Tankred Klaus
(86) International application number: PCT/JP2015/062481
(87) International publication number: WO 2016/021247

(56) References cited:
- EP-A2- 1 369 568
- EP-A2- 2 434 136
- WO-A1-02/12705
- DE-A1-102011 081 158
- JP-A- S61 149 562
- JP-A- 2000 027 718
- JP-A- 2004 506 125
- JP-A- 2007 218 267
- JP-A- 2009 162 183
- JP-A- 2010 229 905

## Description

### Technical Field

The present invention relates to an engine unit and a straddled vehicle.

### Background Art

Some vehicles are provided with canisters. A canister accommodates therein an adsorbent which adsorbs fuel vapor generated in a fuel tank. There is a technique for actively introducing air containing fuel vapor from the canister into a combustion chamber, to reduce the amount of fuel vapor adsorbed by the adsorbent and then discharged from the canister to the atmosphere. This technique is widely used in engine units mounted on automobiles (four-wheeled vehicles). In Patent Literature 1, a solenoid valve is provided to a passage through which fuel vapor is introduced from the canister to an intake passage member. Opening and closing of this valve is controlled according to a duty ratio (or duty cycle), to control the amount of fuel vapor introduced into the combustion chamber. Under the duty ratio control, the solenoid valve is periodically switched on and off, and the period of an on-and-off cycle and/or the pulse width of control signals are adjusted. Due to this, the amount of fuel vapor introduced into the combustion chamber is controlled.

Vehicles provided with canisters are also described in DE 10 2011 081 158 A1,

EP 1 369 568 A2 and WO 02/12705 A1.

### Citation List

### Patent Literature

Patent Literature 1: Japanese Unexamined Patent Publication No. 2007-218267

### Summary of Invention

### Technical Problem

It has been desired to apply the technique described in Patent Literature 1 to engine units used in straddled vehicles such as motorcycles. As a result of technical developments pursued by the present inventors, the following fact was found. If the technique of Patent Literature 1 is applied as it is to an engine unit widely used in straddled vehicles, a disadvantage may be caused. That is, there is a possibility that the amount of fuel vapor introduced from the canister to the combustion chamber varies widely, which makes the control of the engine difficult.

An object of the present invention is to provide an engine unit and a straddled vehicle each of which enables easier control of an engine when fuel vapor is actively introduced from a canister to a combustion chamber.

This object is achieved by a single-cylinder or multi-cylinder four-stroke engine unit according to claim 1.

### Solution to Problem

According to an embodiment of the present teaching, a single-cylinder or multi-cylinder four-stroke engine unit includes: a combustion chamber; an intake passage member through which air is introduced into the combustion chamber; and a throttle valve provided in an intermediate portion of the intake passage member. The combustion chamber, the intake passage member, and the throttle valve are provided for each cylinder. Pressure in a downstream intake passage portion of the intake passage member that is downstream of the throttle valve varies in a pressure-variation manner such that: a smaller depression having a smaller difference from atmospheric pressure and a larger depression having a larger difference from atmospheric pressure are created in each cycle constituted by four strokes; and the creation of the smaller and larger depressions is performed in each four-stroke cycle. The engine unit further includes: a canister connected to a fuel tank and accommodating therein an adsorbent that adsorbs fuel vapor contained in incoming air from the fuel tank; a communication passage member configured to establish communication between an inside of the canister and the downstream intake passage portion for each cylinder; a valve capable of being in an open state in which the valve allows communication of air between an inside of the canister and the intake passage member through the communication passage member, an opening degree of the valve in the open state being adjustable; and a controller configured to control the opening degree of the valve. The controller controls the valve in such a manner that after the controller keeps the opening degree of the valve in the open state at a predetermined level over a plurality of cycles, the controller changes the opening degree of the valve in the open state, on a basis of a one-cycle-based manner of pressure variation in the downstream intake passage portion (110d), said pressure variation included in the pressure-variation manner in which the creation of the smaller and larger depressions is performed in each four-stroke cycle.

The present inventors strived to find out the reason why the amount of fuel vapor introduced from the canister to the combustion chamber varies widely when the technique of Patent Literature 1 is applied as it is to the engine unit widely used in straddled vehicles. The amount of fuel vapor introduced from the canister to the combustion chamber changes depending on the amount of the depression in the downstream intake passage portion, i.e., the difference between the negative pressure in the downstream intake passage portion and atmospheric pressure. The downstream intake passage portion is connected with the communication passage member extending from the canister. Taking the above into consideration, the present inventors compared depressions created in the downstream intake passage portion in the engine unit widely used in straddled vehicles with those in the engine unit widely used in automobiles. As a result of the comparison, the following difference was found.

The engine unit widely used in automobiles has an arrangement which suppresses pressure variation in the downstream intake passage portion. In Patent Literature 1, a surge tank is provided downstream of a throttle valve, and this suppresses the pressure variation. Furthermore, fuel vapor from the canister is introduced into the surge tank. Opening/closing operations of the valve to introduce fuel vapor is controlled by duty ratio in the above arrangement. Then, plotting the amount of introduced air as a function of the duty ratio shows a simple linear relationship as shown in FIG. 2 of Patent Literature 1.

Now, reference is made to the engine unit widely used in straddled vehicles. A multi-cylinder engine unit with individual throttle bodies and a single-cylinder engine unit are widely used in straddled vehicles. In such an engine unit for straddled vehicles, pressure in its downstream intake passage portion varies widely below atmospheric pressure, i.e., a large depression is created in its downstream intake passage portion. Such a large depression is created in each four-stroke cycle, and the creation of the depression is repeated on a four-stroke basis. Consider the case where fuel vapor is introduced from the canister into the downstream intake passage portion. In this case, the amount of air flowing from the communication passage member into the downstream intake passage portion depends on, not only the length of the period during which the valve is open, but also the amount of the depression in the downstream intake passage portion. The amount of the depression is, in other words, the difference between the pressure in the downstream intake passage portion and atmospheric pressure. Now, suppose that the length of the period during which the valve is open is fixed. When the pressure in the downstream intake passage portion varies on this premise, the amount of air introduced from the canister into the downstream intake passage portion varies depending on how the pressure varies during the period in which the valve is open. Accordingly, if the valve is periodically opened/closed as described in Patent Literature 1, i.e., opened/closed totally disregarding the four-stroke-basis pressure-variation manner in the engine unit widely used in straddled vehicles, the following disadvantage occurs. That is, the amount of air flowing from the canister into the downstream intake passage portion varies widely with the pressure variation.

In view of the above, in the present teaching, the amount of introduced fuel vapor is adjusted on the premise that the pressure variation exists, or rather, with the use of the pressure variation. That is, the opening degree of the valve is controlled on the basis of the four-stroke-based manner of the pressure variation included in the pressure-variation manner in which the creation of the smaller and larger depressions is repeated on the four-stroke basis.

With this, the amount of introduced fuel vapor is properly adjustable on the basis of the four-stroke-based manner of the pressure variation when fuel vapor is actively introduced from the canister into the combustion chamber. As a consequence, the control of the engine is easier.

In the present teaching, it is preferable that the controller is configured to control the opening degree of the valve in the open state on a basis of the one-cycle-based manner of the pressure variation for each n-cycle span, where n is a natural number.

In this arrangement, the amount of introduced fuel vapor is adjusted on the basis of the four-stroke-based manner of the pressure variation for each n-cycle span. This makes the control of the engine easier.

Furthermore, in the present teaching, the engine unit may further include a sensor configured to detect negative pressure in the downstream intake passage portion; and the controller may control the opening degree of the valve in the open state on a basis of a detection result obtained by the sensor in each of one or more cycles included in the n-cycle span, the detection result functioning to indicate the one-cycle-based manner of the pressure variation for each n-cycle span.

Furthermore, in the present teaching, it is preferable that: the engine unit further includes a sensor configured to detect negative pressure in the downstream intake passage portion; and the controller is configured to control the opening degree of the valve in the open state on a basis of a detection result obtained by the sensor, the detection result relating to the one-cycle-based manner of the pressure variation.

In this arrangement, the opening degree of the valve is controlled on the basis of the detection result indicating the four-stroke-based manner of the pressure variation. This enables proper adjustment of the amount of introduced fuel vapor on the basis of the four-stroke-based manner of the pressure variation.

In the present teaching, it is preferable that the controller is configured to control the valve so that when a combustion chamber-introduction air amount, which is an amount of air introduced from the downstream intake passage portion into the combustion chamber, is equal to or lower than a predetermined value, a ratio of an amount of fuel vapor introduced from the communication passage member to the downstream intake passage portion to the combustion chamber-introduction air amount increases with an increase in the combustion chamber-introduction air amount.

In this arrangement, the valve is controlled so that the ratio of the amount of fuel vapor introduced into the downstream intake passage portion increases with the increase in the combustion chamber-introduction air amount before the combustion chamber-introduction air amount reaches the predetermined value. Thus, fuel vapor is introduced from the canister to the combustion chamber in such a manner that the influence of the fuel vapor on the combustion in the combustion chamber is small. Accordingly, the control of the engine is easier when fuel vapor is actively introduced from the canister to the combustion chamber.

According to an embodiment of the present teaching, a straddled vehicle includes: the engine unit of the above aspect of the present teaching; a vehicle body frame supporting the engine unit; a rider seat; handlebars provided frontward of the rider seat; and a fuel tank connected to the canister included in the engine unit.

Due to this, when fuel vapor is actively introduced from the canister into the combustion chamber, the amount of introduced fuel vapor is properly adjusted on the basis of the four-stroke-based manner of the pressure variation included in the pressure-variation manner observed in the engine unit widely used in straddled vehicles. As a consequence, a straddled vehicle with an easily controllable engine is provided.

In the present teaching, "a smaller depression having a smaller difference from atmospheric pressure and a larger depression having a larger difference from atmospheric pressure" indicates that there are two depressions, one of which has a difference from atmospheric pressure larger than that of the other's.

### Brief Description of Drawings

FIG. 1 shows a side view of a motorcycle related to an embodiment of the present teaching.
FIG. 2 shows a schematic diagram illustrating an engine unit of the motorcycle in FIG. 1 and its peripherals. The diagram includes a partial cross section of an engine in the engine unit, and partially illustrates the internal structure of the engine.
FIG. 3A and FIG. 3B each shows a cross-section of a flow regulating valve provided to a communication passage member coupling a canister to a downstream intake passage portion. Each cross-section partially includes a front view of its internal structure.
FIG. 4 shows a combination of: charts respectively showing the open/closed states of an intake valve and an exhaust valve; and a graph showing the variation in pressure in the downstream intake passage portion.
FIG. 5A and FIG. 5B show graphs of conditions for controlling the flow regulating valve.
FIG. 6 shows a combination of: a graph of a change in the manner of pressure variation in the downstream intake passage portion; and a graph showing an operation to change the opening degree of the flow regulating valve under the control of an electronic control unit (ECU) on the basis of the change in the manner of pressure variation.
FIG. 7 shows a schematic diagram for a modification in which the present teaching is applied to a multi-cylinder engine unit.
FIG. 8 shows a graph of a modification with respect to the control method for the flow regulating valve.

### Description of Embodiments

The following will describe an embodiment of the present teaching, with reference to a motorcycle 1 as an example. The motorcycle 1 is provided with an engine unit 100 which embodies an engine unit of the present teaching.

In the following description, a front-back direction refers to a vehicle's front-back direction as seen from a rider R seated on a rider seat 11 of the motorcycle 1. The rider seat 11 will be described later. A left-right direction refers to a vehicle's left-right direction (vehicle width direction) as seen from the rider R seated on the rider seat 11. Arrows F and B in the drawings respectively indicate a frontward direction and a backward direction. Arrows L and R in the drawings respectively indicate a leftward direction and a rightward direction.

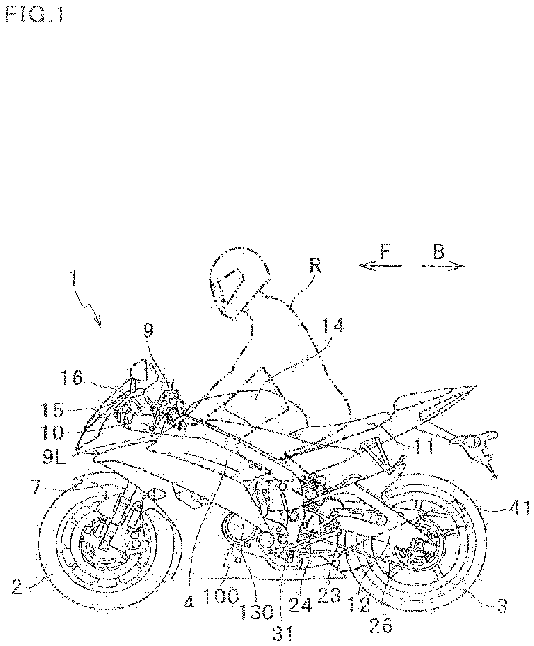

As shown in FIG. 1, the motorcycle 1 includes a front wheel 2, a rear wheel 3, a vehicle body frame 4, and the rider seat 11. A handle unit 9 is provided to a portion of the vehicle body frame 4 which is frontward of the rider seat 11. A grip 9R is provided at a right end portion of the handle unit 9, and a grip 9L is provided at a left end portion of the handle unit 9. It should be noted that only the grip 9L is illustrated in FIG. 1. The grip 9R is located on the other side from the grip 9L in the left-right direction. The grip 9R is a throttle grip. A brake lever is attached in the vicinity of the grip 9R. A clutch lever 10 is attached in the vicinity of the grip 9L. An upper end portion of a front fork 7 is secured to the handle unit 9. A lower end portion of the front fork 7 supports the front wheel 2.

A swingarm 12 is swingably supported, at its front end portion, by a lower portion of the vehicle body frame 4. A rear end portion of the swingarm 12 supports the rear wheel 3. A rear suspension connects a portion of the swingarm 12 which is not a swingarm pivot to the vehicle body frame 4. The rear suspension absorbs shock in the up-down direction.

The vehicle body frame 4 supports a single-cylinder engine unit 100. The vehicle body frame 4 may directly support the engine unit 100, or may indirectly support the engine unit 100 via another member. The engine unit 100 includes a four-stroke engine 130. The detailed structure of the engine unit 100 will be described later. An air cleaner 31 is connected to the engine 130. The air cleaner 31 is configured to clean incoming outside or external air. The air having been cleaned by the air cleaner 31 is introduced into the engine 130. A muffler 41 is connected to the engine 130. A fuel tank 14 is provided above the engine 130.

A transmission having a plurality of shift gears is provided rearward of the engine 130. The driving force of the engine 130 is transmitted to the rear wheel 3 via the transmission and a chain 26. A shift pedal 24 for changing the gears of the transmission is provided to the left of the transmission. Footrests 23 are provided to the right and left of the vehicle body frame 4. The footrests 23 are located slightly frontward of the rear wheel 3. The footrests 23 are configured to support the feet of the rider R riding the motorcycle.

A front cowling 15 is located above the front wheel 2 and in front of the grips 9R and 9L. A meter unit 16 is located between the front cowling 15 and the grips 9R and 9L in the front-back direction. The display surface of the meter unit 16 is configured to display thereon vehicle speed, engine speed, vehicle state, traveled distance, clock time, measured time, and the like.

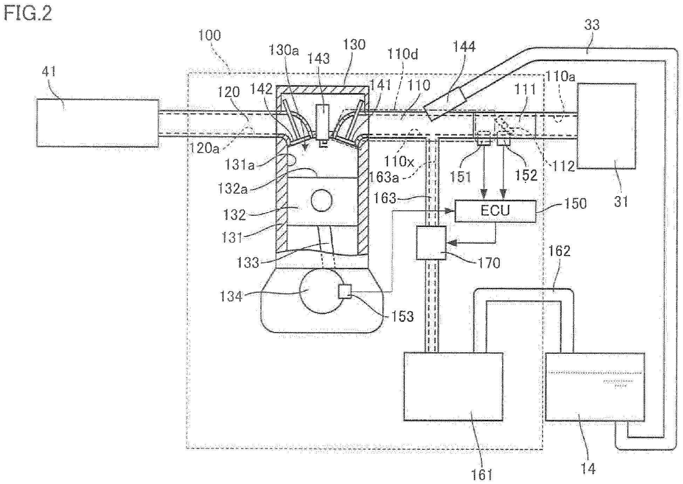

The following will describe the engine unit 100 in detail, with reference to FIG. 2. The engine unit 100 includes, in addition to the engine 130, an intake passage member 110 and an exhaust passage member 120. The intake passage member 110 and the exhaust passage member 120 are connected to the engine 130. The engine unit 100 further includes a canister 161, and an ECU (Electronic Control Unit) 150. The engine 130 is a four-stroke single-cylinder engine. In this engine 130, a crankshaft 134 (to be described later) rotates two revolutions in one engine cycle. One engine cycle is constituted by four strokes, which are the intake stroke, the compression stroke, the combustion stroke, and the exhaust stroke. The ECU 150 is configured by hardware such as a CPU (Central Processing Unit), a ROM (Read Only Memory), a RAM (Random Access Memory), and an ASIC (Application Specific Integrated Circuit), and by software such as program data stored in the ROM and/or the RAM. The CPU executes various types of information processing based on the software such as the program data. The ASIC controls components of the engine 130 based on the results of the above information processing. With this configuration, the ECU 150 controls the components of the engine 130 so that the above-mentioned four strokes are smoothly performed.

The engine 130 includes a cylinder 131, a piston 132, and the crankshaft 134. The piston 132 is provided in the cylinder 131. The crankshaft 134 is connected to the piston 132 via a connecting rod 133. A combustion chamber 130a is provided in the cylinder 131. The combustion chamber 130a is formed by an outer surface 132a of the piston 132 and an inner wall surface 131a of the cylinder 131. The combustion chamber 130a communicates with an intake passage 110a and an exhaust passage 120a. The intake passage 110a is in the intake passage member 110, and the exhaust passage 120a is in the exhaust passage member 120.

An intake valve 141 is provided at a communication opening between the intake passage 110a and the combustion chamber 130a. An exhaust valve 142 is provided at a communication opening between the exhaust passage 120a and the combustion chamber 130a. The engine 130 is provided with a valve operating mechanism configured to operate the intake valve 141 and the exhaust valve 142 in association with the movement of the crankshaft 134. The valve operating mechanism includes members such as a camshaft, rocker arms, rocker shafts, and the like. These members transmit power generated by the rotating crankshaft 134 to the intake valve 141 and the exhaust valve 142. This arrangement enables the intake valve 141 and the exhaust valve 142 to repeatedly open/close their respective communication openings between the intake and exhaust passages 110a and 120a and the combustion chamber 130a, at proper timings. The timings for opening/closing the valves are associated with the four strokes constituting one engine cycle. An ignition plug 143 is provided to ignite an air-fuel mixture in the combustion chamber 130a. The leading end of the ignition plug 143 is located in the combustion chamber 130a. The ignition plug 143 is electrically connected with the ECU 150. The ECU 150 controls the ignition by the ignition plug 143.

The intake passage 110a communicates with the combustion chamber 130a at one end of the intake passage member 110. The other end of the intake passage member 110 is connected to the air cleaner 31. Outside air is taken through the air cleaner 31. The air cleaner 31 cleans the air taken therethrough. Air, having been cleaned by the air cleaner 31, is introduced into the intake passage member 110. Air, having been introduced from the air cleaner 31 into the intake passage member 110, passes through a throttle body 111 toward the engine 130. The throttle body 111 forms a part of the intake passage member 110. The throttle body 111 houses therein a throttle valve 112 so that its throttle opening angle is changeable. The throttle valve 112 is supported by the throttle body 111 so that the opening degree of a portion of the intake passage 110a that is located in the throttle body 111 changes depending on the throttle opening angle of the throttle valve 112. As the throttle opening angle of the throttle valve 112 changes, the flow rate of the air passing through the throttle body 111 changes. The throttle body 111 is provided with an electric motor configured to change the throttle opening angle of the throttle valve 112. The electric motor is electrically connected with the ECU 150. The ECU 150 controls how much the throttle valve 112 is rotated by the electric motor. With this, the ECU 150 controls the amount of air flowing from the air cleaner 31 into the engine 130 through the intake passage member 110.

A fuel injector 144 is provided to the intake passage member 110. The fuel injector 144 is configured to inject fuel into the intake passage 110a. The fuel injector 144 is connected to the fuel tank 14 via a fuel supply pipe 33. Fuel is supplied to the fuel injector 144 from the fuel tank 14 through the fuel supply pipe 33. The fuel injector 144 is electrically connected with the ECU 150. The ECU 150 controls fuel injection by the fuel injector 144 into the intake passage 110a.

The exhaust passage 120a communicates with the combustion chamber 130a at one end of the exhaust passage member 120. The other end of the exhaust passage member 120 is connected to the muffler 41. Exhaust gas from the engine 130 is discharged to the muffler 41 through the exhaust passage member 120. A three-way catalyst is provided in the exhaust passage 120a. The catalyst purifies the exhaust gas flowing from the engine 130 into the exhaust passage member 120. The exhaust gas purified by the catalyst is discharged to the outside through the muffler 41.

The engine unit 100 is provided with various sensors. For example, the throttle body 111 is provided with an intake pressure sensor 151. The intake pressure sensor 151 detects the pressure in a portion of the intake passage 110a that is downstream of the throttle valve 112. The portion is a downstream intake passage 110x, which will be described later. The throttle body 111 is further provided with a throttle position sensor 152 which detects the throttle opening angle of the throttle valve 112. The crankshaft 134 is provided with an rpm sensor 153 which detects the rpm (revolutions per minute) of the crankshaft 134. The rpm sensor 153 also detects the position of the crankshaft 134. Signals of the detection results obtained by the sensors are transmitted to the ECU 150. The ECU 150 controls the operation of the components of the engine unit 100 based on the detection results transmitted by the sensors.

The engine unit 100 further includes a canister 161. The canister 161 is provided to suppress the discharge of fuel vapor from the fuel tank 14 to the atmosphere by collecting fuel vapor in the fuel tank 14. The canister 161 accommodates therein an adsorbent such as activated charcoal. The canister 161 is connected with the fuel tank 14 via a vent pipe 162. Fuel vapor in the fuel tank 14 flows into the canister 161 through the vent pipe 162. The fuel vapor introduced in the canister 161 is adsorbed by the adsorbent in the canister 161.

The canister 161 is also coupled to the intake passage member 110 via a communication passage member 163 (corresponding to a communication pipe in the present teaching). The inside of the canister 161 communicates with a communication passage 163a provided in the communication passage member 163 at one end of the communication passage member 163. The other end of the communication passage member 163 is connected to a downstream intake passage portion 110d of the intake passage member 110. The downstream intake passage portion 110d is the portion of the intake passage member 110 that is downstream of the throttle valve 112. As a consequence, the inside of the canister 161 communicates with a downstream intake passage 110x of the intake passage 110a via the communication passage 163a. The downstream intake passage 110x is the portion of the intake passage 110a that is located in the downstream intake passage portion 110d. In FIG. 2, the downstream intake passage 110x is shown as a part encircled by two-dot chain lines.

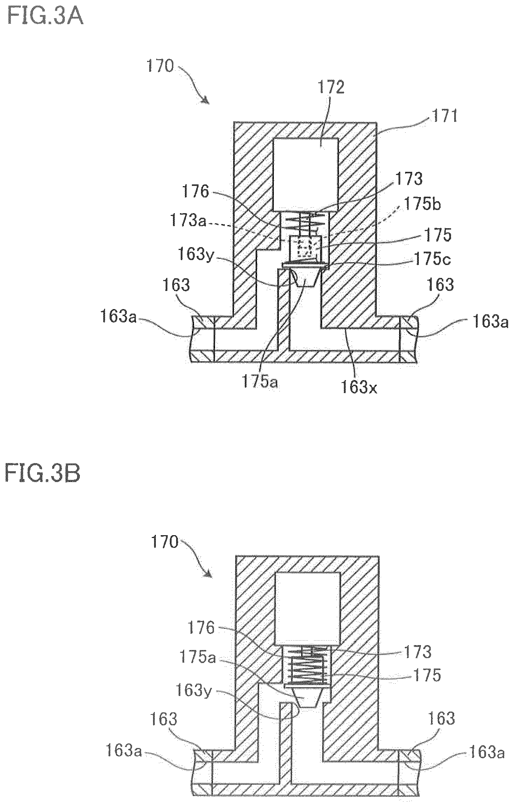

A flow regulating valve 170 is provided to an intermediate portion of the communication passage member 163. As shown in FIG. 3A, the flow regulating valve 170 includes: a case 171, a stepping motor 172, a rotor shaft 173, a valve body 175, and a spring 176. The case 171 is fixed to the communication passage member 163. The stepping motor 172 is provided in the case 171. Furthermore, a communication passage 163x is provided in the case 171. The communication passage 163x is bent in an Ω (ohm) shape. The communication passage 163x is a part of the communication passage 163a. The spring 176 biases the valve body 175 downward in FIG. 3A. The valve body 175 has a leading end portion 175a. The leading end portion 175a has a conical frustum shape tapering narrower toward its lower end in FIG. 3A. In the state shown in FIG. 3A, the leading end portion 175a of the valve body 175 completely closes an opening 163y. The opening 163y is contained in the communication passage 163x. The valve body 175 has a threaded hole 175b. The rotor shaft 173 is inserted into the threaded hole 175b from above in FIG. 3A. The rotor shaft 173 has a threaded portion 173a at its leading end portion. The threaded portion 173a is screwed into the threaded hole 175b.

The stepping motor 172 is configured to rotate the rotor shaft 173. The angle of rotation of the rotor shaft 173 by the stepping motor 172 is controllable in a stepwise manner. The valve body 175 has a restriction portion 175c. The restriction portion 175c projects outward from a main body of the valve body 175. The rotation of the valve body 175 is restricted by the restriction portion 175c when the restriction portion 175c comes into contact with an inner surface of the communication passage 163x. As described above, the threaded portion 173a of the rotor shaft 173 is screwed in the threaded hole 175b of the valve body 175. Thus, when the rotor shaft 173 rotates in a first direction, the valve body 175 moves upward in FIG. 3A against the spring 176 biasing the valve body 175. When the valve body 175 reaches an upper limit position, the leading end portion 175a of the valve body 175 opens the opening 163y to the maximum opening degree, as shown in FIG. 3B. Meanwhile, when the rotor shaft 173 rotates in a second direction opposite to the first direction, the valve body 175 moves downward in FIG. 3B. When the valve body 175 reaches a lower limit position, the leading end portion 175a completely closes the opening 163y again, as shown in FIG. 3A.

Reference is made to FIG. 3A where the valve body 175 completely closes the opening 163y. In this state, communication of fuel vapor between the canister 161 and the downstream intake passage portion 110d is not possible. Meanwhile, when the valve body 175 opens the opening 163y, communication of fuel vapor between the canister 161 and the downstream intake passage portion 110d via the opening 163y is allowed. The state of the flow regulating valve 170 in this state is an "open state" in the present teaching. The amount of fuel vapor passable through the opening 163y depends on the opening degree of the opening 163y opened by the valve body 175. In the state of FIG. 3B, the valve body 175 opens the opening 163y to the maximum opening degree. The amount of fuel vapor passable through the opening 163y is at the maximum in this state.

The ECU 150 controls the opening degree of the opening 163y opened by the valve body 175, by controlling the angle of rotation of the rotor shaft 173 by the stepping motor 172 in a stepwise manner. As such, the ECU 150 controls the opening degree of the opening 163y in the flow regulating valve 170. Hereinafter, this opening degree is referred to as an "opening degree of the flow regulating valve 170."

When the opening 163y in the flow regulating valve 170 is opened, communication between the inside of the canister 161 and the intake passage 110a via the flow regulating valve 170 is allowed. Meanwhile, pressure is transmitted from the combustion chamber 130a to the downstream intake passage 110x. The downstream intake passage 110x is a part of the intake passage 110a that is connected to the combustion chamber 130a. The pressure in the downstream intake passage 110x is mostly below atmospheric pressure in or during the intake stroke, for example. If the opening 163y in the flow regulating valve 170 is open in the intake stroke, the pressure below atmospheric pressure is transmitted from the downstream intake passage 110x to the canister 161 through the communication passage 163a. As a result, fuel vapor in the canister 161 flows into the intake passage 110a through the communication passage 163a. The fuel vapor having flowed into the intake passage 110a further flows into the combustion chamber 130a. The fuel vapor introduced into the combustion chamber 130a ignites in the combustion chamber 130a. Fuel vapor in the canister 161 is thus introduced into the combustion chamber 130a, and this reduces the discharge of the fuel vapor in the canister 161 to the atmosphere. The amount of fuel vapor introduced from the canister 161 into the combustion chamber 130a depends on: the opening degree of the flow regulating valve 170; and the pressure in the downstream intake passage 110x. The amount of introduced fuel vapor is adjustable by adjusting the opening degree of the flow regulating valve 170.

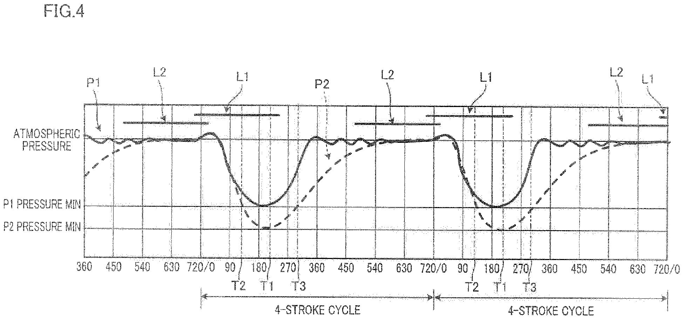

Now, in the field of automobiles (four-wheeled vehicles), the following technique is known: a solenoid valve configured to open/close a passage for introducing fuel vapor from a canister to an intake system is controlled by duty ratio. In this regard, the present inventors pursued technical developments, and found the fact as follows. If the above technique for automobiles is applied to an engine unit widely used in straddled vehicles, a disadvantage may be caused. That is, there is a possibility that the amount of fuel vapor introduced from the canister to the combustion chamber varies widely, which makes the control of the engine difficult. In view of the above, the present inventors wholeheartedly researched for a control method which eliminates or reduces the difficulty in the engine control when fuel vapor is actively introduced from the canister to the combustion chamber. As a result of the wholehearted research, the present inventors arrived at a control method which eliminates or reduces the above difficulty. Examples of the control method will be hereinafter described with reference to FIG. 4 to FIG. 6.

Each line segment L1 in FIG. 4 shows the period during which the intake valve 141 is open in a four-stroke cycle. Each line segment L2 shows the period during which the exhaust valve 142 is open in the four-stroke cycle. Curves P1 and P2 show pressure variation in the downstream intake passage 110x in the intake passage 110a. Numerical values plotted on the abscissa in FIG. 4 represent crank angles in degrees. In this embodiment, the crank angle of 0 degree corresponds to the timing around the midpoint of the period from the timing for opening the intake valve 141 to the timing for closing the exhaust valve 142. The ordinate in FIG. 4 represents pressure values, for a graph showing the pressure variation in the downstream intake passage 110x.

The curve P1 shows the pressure variation in the condition where the crankshaft 134 rotates at a predetermined rpm. The curve P2 shows the pressure variation in the condition where: the throttle opening angle of the throttle valve 112 is the same as that for the curve P1; and the crankshaft 134 rotates at an rpm higher than that for the curve P1. As shown in the curves P1 and P2, the pressure in the downstream intake passage 110x starts to drop from atmospheric pressure a short time after the intake valve 141 starts to open. For the curve P1, the pressure reaches a bottom or a lowest value at around a crank angle of 180 degrees, and then turns to rise. After the intake valve 141 is closed, the pressure returns to the vicinity of the atmospheric pressure, at around a crank angle of 360 degrees. Then, the pressure slightly fluctuates around the atmospheric pressure and gradually becomes substantially constant. Meanwhile, for the curve P2, after the pressure reaches a bottom or a lowest value at around a crank angle of 200 degrees, the pressure returns to the atmospheric pressure more gently than in the pressure variation of the curve P1. In addition, the smallest pressure value in the curve P2 is smaller than that in the curve P1.

As such, a larger depression having a larger difference from atmospheric pressure and a smaller depression having a smaller difference from atmospheric pressure are created in order or sequence in each four-stroke cycle, in response to opening and closing of the intake valve 141. The larger depression appears around the range from 180 to 200 degrees, in the curves P1 and P2. The smaller depression appears in the range from 360 to 720 degrees in the curve P1, and in the range from 540 to 720 degrees in the curve P2. As the four-stroke cycle is repeated, the above pressure variation is repeatedly caused in the downstream intake passage 110x. Thus, the pressure varies in a pressure-variation manner such that the creation of the larger and smaller depressions is repeated on a four-stroke basis. This pressure-variation manner can be observed in the engine unit widely used in four-stroke straddled vehicles. The shift from the curve P1 to the curve P2 is caused by the increase in the rpm of the crankshaft, as described above. The curve P1 shifts in the same manner also when the throttle opening angle of the throttle valve 112 is decreased without changing the rpm of the crankshaft. That is to say, the smaller the throttle opening angle of the throttle valve 112 is, the greater the amount of pressure variation is.

The present inventors devised the following control method as a method for controlling the flow regulating valve 170 by the ECU 150.

The ECU 150 obtains the pressure in the downstream intake passage 110x at a specific timing in each four-stroke cycle (each cycle), based on the detection results obtained by the sensors 151 to 153. The specific timing is, for example, a timing T1 in FIG. 4. The timing T1 corresponds to the crank angle of approximately 210 degrees. Then, at least based on the obtained pressure, the ECU 150 controls the opening degree of the flow regulating valve 170 so as to be an appropriate degree in accordance with the pressure in the downstream intake passage 110x. On the basis of the detected pressure in the downstream intake passage 110x, the ECU 150 keeps or changes the opening degree of the flow regulating valve 170. The timing to change the opening degree of the flow regulating valve 170 may be within a four-stroke cycle, or may correspond to the boundary between four-stroke cycles, i.e., at a crank angle of 0 or 720 degrees.

The ECU 150 may control the flow regulating valve 170 based on the pressure values in the downstream intake passage 110x detected at a plurality of timings in a four-stroke cycle. For example, the ECU 150 may control the flow regulating valve 170 as follows: the ECU 150 obtains pressure values at timings of T1, T2 and T3 in FIG. 4, and calculates the average of the obtained pressure values. Then, the ECU 150 controls the valve 170 on the basis of the thus obtained average. The timing T2 corresponds to the crank angle of approximately 120 degrees. The timing T3 corresponds to the crank angle of approximately 300 degrees. The timings T1 to T3 are described by way of example, and may be freely set. Furthermore, pressure values detected at two timings, or four or more timings, may be used for the control. The timings T1 to T3 (crank angles) are obtained based on the crank position of the crankshaft 134 detected by the rpm sensor 153.

As described above, if the driving status of the motorcycle 1 changes, a change is caused also in the manner of the pressure variation in the downstream intake passage 110x. For example, if the rpm of the engine 130 changes, the manner of the pressure variation in the downstream intake passage 110x changes from the manner shown by the curve P1 to that shown by the curve P2. Suppose that the opening degree of the flow regulating valve 170 is fixed. On this premise, the amount of fuel vapor flowing from the communication passage 163a into the downstream intake passage 110x differs between the case where the engine 130 runs at the rpm in the curve P1 and the case where the engine 130 runs at the rpm in the curve P2. Furthermore, the change in the rpm of the engine 130 also causes a change in the amount of air flowing into the combustion chamber 130a. Thus, the change in the rpm changes the amounts of inflow of fuel vapor and inflow of air. This changes the degree of influence of fuel vapor on the air-fuel ratio of the air-fuel mixture in the combustion chamber 130a. For this reason, introduction of fuel vapor into the combustion chamber 130a may hinder stable burning of the air-fuel mixture in the combustion chamber 130a at a desired air-fuel ratio.

Hence, for the purpose of stable burning of fuel in the combustion chamber 130a, the ECU 150 of this embodiment is configured to control the amount of fuel vapor introduced into the combustion chamber 130a as follows. The ECU 150 controls the opening degree of the flow regulating valve 170 based on the detection value for the rpm of the engine 130 and the detection value for the pressure in the downstream intake passage 110x. These detection values are obtained from detection results obtained by the sensors 151 to 153. The detection result obtained by the intake pressure sensor 151 may be directly used as the detection value for the pressure in the downstream intake passage 110x. Alternatively, the value for the pressure in the downstream intake passage 110x may be derived from the detection results obtained by the throttle position sensor 152 and the rpm sensor 153. Which of the above ways is used is determined depending on the driving status. That is, either the detection result obtained by the intake pressure sensor 151 or the pressure value derived from the detection results obtained by the throttle position sensor 152 and the rpm sensor 153 is selected depending on the driving status. For example, the detection result obtained by the intake pressure intake pressure sensor 151 may be used when the rpm of the engine 130 is low, and the pressure value derived from the detection results obtained by the throttle position sensor 152 and the rpm sensor 153 may be used when the rpm of the engine 130 is high. As described above, the detection value for the pressure in the downstream intake passage 110x may be a pressure value at a specific timing within each four-stroke cycle, or may be the average of pressure values at multiple timings in each four-stroke cycle.

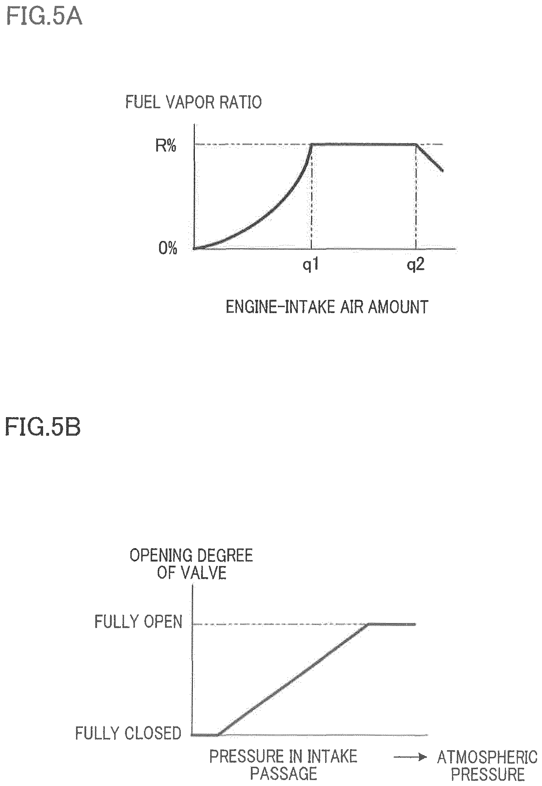

The ECU 150 performs the control so that the ratio of the amount of inflow of fuel vapor per four-stroke cycle to the amount of air taken into the engine satisfies the relationship shown in FIG. 5A. Note that the amount of air taken into the engine may be referred to as an "engine-intake air amount". The engine-intake air amount is equivalent to a "combustion chamber-introduction air amount" in the present teaching. The abscissa of the graph in FIG. 5A represents the engine-intake air amount. The engine-intake air amount is the amount of air flowing into the combustion chamber 130a per four-stroke cycle. This amount is obtainable from: the rpm of the engine 130; and the throttle opening angle of the throttle valve 112 or the pressure in the downstream intake passage 110x. The ordinate of the graph in FIG. 5A represents the ratio of the amount of inflow of fuel vapor to the engine-intake air amount. Hereinafter, this ratio is referred to as a "fuel vapor ratio". The fuel vapor ratio is a percentage of the amount of fuel vapor flowing from the communication passage 163a into the downstream intake passage 110x per four-stroke cycle relative to the engine-intake air amount.

As shown in FIG. 5A, when the engine-intake air amount is smaller than a first value q1, the control is made so that the fuel vapor ratio simply increases with the increase in the engine-intake air amount. The larger the engine-intake air amount is, the smaller the influence of the fuel vapor introduced into the combustion chamber 130a on the combustion of the fuel is. Accordingly, by increasing the amount of fuel vapor introduced into the combustion chamber 130a with the increase in the engine-intake air amount, a large amount of fuel vapor is introduced into the combustion chamber 130a with a small influence on the combustion of the fuel. When the engine-intake air amount exceeds the first value q1, the control is made so that the fuel vapor ratio is kept constant at a predetermined value of R%. This is because, if the percentage of the amount of fuel vapor to the engine-intake air amount exceeds R%, control of the combustion in the engine 130 is difficult. When the engine-intake air amount further increases (e.g., when the engine-intake air amount exceeds a second value q2 larger than the first value q1), the fuel vapor ratio decreases with an increase in the engine-intake air amount. This is because, if the engine-intake air amount exceeds the second value q2, the fuel vapor ratio decreases with the increase in the engine-intake air amount even though the opening degree of the flow regulating valve 170 is set to 100%. The reason why the fuel vapor ratio decreases is as follows. The difference in the pressure in the downstream intake passage 110x from atmospheric pressure decreases when the engine-intake air amount increases at a constant rpm. The decreased difference in pressure makes it difficult for the fuel vapor to flow into the downstream intake passage 110x. This makes the increment in the amount of inflow of fuel vapor smaller than the increment in the engine-intake air amount.

In order to adjust the fuel vapor ratio to satisfy the relationship shown in FIG. 5A, the amount of introduced fuel vapor to the engine-intake air amount has to be controlled at a desired value. The amount of fuel vapor flowing from the communication passage 163a to the downstream intake passage 110x depends on the pressure in the downstream intake passage 110x. Then, the ECU 150 controls the flow regulating valve 170 so that the opening degree of the flow regulating valve 170 relative to the pressure in the downstream intake passage 110x satisfies the relationship shown in FIG. 5B. As shown in FIG. 5B, the opening degree of the flow regulating valve 170 is adjusted so that the opening degree increases toward its fully open state as the detection value for the pressure in the downstream intake passage 110x approaches the atmospheric pressure. A desired amount of inflow of fuel vapor is ensured by increasing the opening degree of the flow regulating valve 170 as the detection value for the pressure in the downstream intake passage 110x approaches the atmospheric pressure.

The ECU 150 of this embodiment is configured to control the opening degree of the flow regulating valve 170 without calculating any of the engine-intake air amount and the fuel vapor ratio, as described below. The ECU 150 includes a storage unit. The storage unit of the ECU 150 stores therein: information for the rpm of the engine 130 and the throttle opening angle of the throttle valve 112; and information for the pressure in the downstream intake passage 110x. These pieces of information are associated with each other. With reference to the stored information, the ECU 150 derives the pressure in the downstream intake passage 110x from the rpm of the engine 130 and the throttle opening angle of the throttle valve 112. Alternatively, the ECU 150 directly obtains the pressure in the downstream intake passage 110x from the detection result obtained by the intake pressure sensor 151. The storage unit of the ECU 150 further stores therein: information for the opening degree of the flow regulating valve 170; and information for the rpm of the engine 130 and for pressure in the downstream intake passage 110x. These pieces of information are associated with each other. These pieces of information have been associated with each other in such a manner that the control by the ECU 150 satisfies the relationships shown in FIG. 5A and FIG. 5B when the ECU 150 controls the flow regulating valve 170 based on the stored information and detection values. The ECU 150 obtains a piece of information for the opening degree of the flow regulating valve 170 that is associated with the detection value for the rpm of the engine 130 and the detection value for the pressure in the downstream intake passage 110x. Then, the ECU 150 controls the flow regulating valve 170 so that the opening degree of the flow regulating valve 170 is equal to the value of the information obtained from the storage unit.

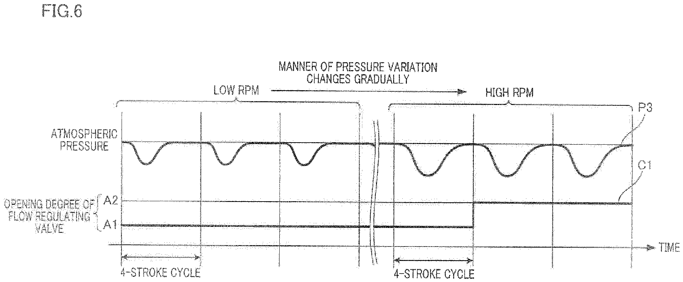

The driving status such as the rpm of the engine 130 smoothly changes. In contrast to the smooth change, the ECU 150 controls the flow regulating valve 170 so that the opening degree of the valve 170 changes in a stepwise manner. For example, when the rpm increases with the throttle opening angle of the throttle valve 112 remaining unchanged, the manner of the pressure variation in the downstream intake passage 110x does not greatly change promptly in response to the increase in the rpm. Rather, the manner of the pressure variation changes gradually over multiple four-stroke cycles (over a plurality of cycles), as indicated by a curve P3 in FIG. 6. The ECU 150 does not change the opening degree of the flow regulating valve 170 immediately when the manner of the pressure variation in the downstream intake passage 110x changes slightly. As indicated by a line C1 in FIG. 6, the ECU 150 keeps the opening degree of the flow regulating valve 170 at A1 over multiple four-stroke cycles. Then, the ECU 150 changes the opening degree of the valve 170 from A1 to A2 only after the amount of change in the manner of the pressure variation in the downstream intake passage 110x exceeds a predetermined value. Thus, under the control by the ECU 150, the opening degree of the flow regulating valve 170 is kept unchanged over multiple four-stroke cycles; and the opening degree is changed in a stepwise manner in relation to the change in the rpm and the change in the manner of the pressure variation in the downstream intake passage 110x.

The above is an example in which the opening degree of the flow regulating valve 170 is controlled without calculating any of the engine-intake air amount and the fuel vapor ratio. Alternatively, the flow regulating valve 170 may be controlled based on the engine-intake air amount calculated based on the following detection values. The detection values are: the detection value for the rpm of the engine 130; and the detection value for the pressure in the downstream intake passage 110x or the detection value for the throttle opening angle of the throttle valve 112. For example, the ECU 150 may be configured as follows. The storage unit of the ECU 150 stores therein data indicating the graphs of FIG. 5A and FIG. 5B. The ECU 150 calculates the engine-intake air amount using the detection values. Then, the ECU 150 obtains the fuel vapor ratio corresponding to the thus calculated engine-intake air amount, with reference to the graph of FIG. 5A. Subsequently, the ECU 150 obtains the opening degree of the flow regulating valve 170 corresponding to the pressure in the downstream intake passage 110x derived from the detection values, with reference to the graph of FIG. 5B. Then, the ECU 150 controls the flow regulating valve 170 based on the thus obtained opening degree.

The ECU 150 may be arranged to control the flow regulating valve 170 without deriving the pressure in the downstream intake passage 110x. For example, the following arrangement is possible. The storage unit of the ECU 150 stores therein information for the rpm of the engine 130 and the throttle opening angle of the throttle valve 112 and information for the opening degree of the flow regulating valve 170. These pieces of information are associated with each other. Then, the ECU 150 directly obtains the piece of information for the opening degree of the flow regulating valve 170 from the storage unit, that is associated with the values for the rpm of the engine 130 and the throttle opening angle of the throttle valve 112. In this arrangement, it is not necessary for the ECU 150 to derive the pressure in the downstream intake passage 110x. Thereafter, the ECU 150 controls the flow regulating valve 170 so that the opening degree of the flow regulating valve 170 is equal to the value of the information obtained from the storage unit. In this case, the storage unit of the ECU 150 does not have to store the information for the pressure in the downstream intake passage 110x associated with the information for the rpm of the engine 130 and for the throttle opening angle of the throttle valve 112. That is, in the above case, it is only required for the storage unit of the ECU 150 to store the information for the opening degree of the flow regulating valve 170 associated with the information for the rpm of the engine 130 and throttle opening angle of the throttle valve 112. Furthermore, in the above case, a detector configured to directly detect the pressure in the downstream intake passage 110x does not have to be provided. That is, the intake pressure sensor 151 may be omitted in the above case.

It should be noted that the graphs of FIG. 5A and FIG. 5B are merely ideal examples referred to in the control by the ECU 150. It is preferable that the control is made so as to satisfy the relationships shown in these graphs as much as possible. Note that the control does not have to be made so that its result strictly satisfies the relationships shown in these graphs.

According to the present embodiment described above, the control of the engine 130 is easier when fuel vapor from the canister 161 is actively introduced into the combustion chamber 130a. The control is not easier when the duty ratio control used for the control of the induction of fuel vapor in automobiles is applied as it is in straddled vehicles. The following will describe the reason why the control is easier in this embodiment.

The present inventors compared depressions created in the intake passage in the engine unit widely used in straddled vehicles with those in the engine unit widely used in automobiles. As a result of the comparison, the present inventors found that there is the following difference between straddled vehicles and automobiles. The engine unit widely used in automobiles adopts the arrangement which suppresses pressure variation in the intake passage. Meanwhile, in the motorcycle 1, which is an example of straddled vehicles, a large depression is created in the downstream intake passage 110x in each four-stroke cycle, as shown by the curves P1 and P2 in FIG. 4. When fuel vapor from the canister 161 is introduced into the downstream intake passage 110x by switching a valve on and off, the amount of air flowing from the communication passage 163a into the downstream intake passage 110x depends on not only the length of the period during which the valve is open, but also on the pressure in the downstream intake passage 110x. Now, suppose that the length of the period during which the valve is open is fixed. When the pressure in the downstream intake passage 110x varies on this premise, the amount of air introduced from the canister 161 into the downstream intake passage 110x varies depending on how the pressure varies during the open period of the valve. Accordingly, if the valve is periodically opened/closed under the duty ratio control, which is used for introducing fuel vapor in automobiles, totally disregarding the four-stroke-basis pressure-variation manner, the following disadvantage occurs. That is, the amount of air flowing from the canister 161 into the downstream intake passage 110x varies widely with the pressure variation in the downstream intake passage 110x.

To deal with this, in the present embodiment, the amount of introduced fuel vapor is adjusted on the premise that the above-described pressure variation exists, or rather, with the use of the pressure variation. That is, the flow regulating valve 170 is provided in this embodiment. The flow regulating valve 170 is configured so that the amount of introduced fuel vapor is adjustable by adjusting the opening degree of the flow regulating valve 170. The amount of introduced fuel vapor is not controlled by switching the valve on and off. Alternatively, the amount of introduced fuel vapor is controlled by adjusting the opening degree of the flow regulating valve 170 with the valve kept open. This arrangement eliminates the above problem: the amount of fuel vapor introduced varies greatly depending on the timing of switching on/off operation of the valve. Furthermore, the opening degree of the flow regulating valve 170 is controlled on the basis of a four-stroke-based manner of the pressure variation included in the pressure-variation manner in which the creation of the smaller and larger depressions is repeated on a four-stroke basis. Specifically, the opening degree of the flow regulating valve 170 is controlled based on the value(s) of pressure in the downstream intake passage 110x at a specific timing or multiple timings in each four-stroke cycle. Thus, control is made on the basis of the four-stroke-based manner of the pressure variation. Therefore, proper control is made to follow a change in the pressure-variation manner in which pressure varies widely on a four-stroke basis.

As above, the amount of introduced fuel vapor is properly adjustable on the basis of the four-stroke-based manner of the pressure variation when fuel vapor is actively introduced from the canister 161 into the combustion chamber 130a. This makes the control of the engine 130 easier.

In the present embodiment, as shown in FIG. 6, the opening degree of the flow regulating valve 170 is changed in a stepwise manner when the manner of the pressure variation in the intake passage 110a changes as a result of a change in the driving status such as the rpm of the engine 130. That is, the opening degree of the flow regulating valve 170 is not changed immediately in response to the smooth change in the rpm of the engine 130 over multiple four-stroke cycles. Alternatively, the opening degree of the flow regulating valve 170 is changed only after the amount of the change in the manner of the pressure variation in the intake passage 110a exceeds the predetermined value. Thus, the opening degree of the flow regulating valve 170 is not frequently changed in response to every change in the manner of the pressure variation in the downstream intake passage 110x. This stabilizes the amount of introduced fuel vapor. Accordingly, the control is made so as to properly follow a change in the manner of the pressure variation, while fuel vapor is stably introduced into the combustion chamber 130a. It should be noted that the opening degree of the flow regulating valve 170 may be changed immediately in response to a change in the driving status such as the rpm of the engine 130. For example, the opening degree of the flow regulating valve 170 may be changed in each four-stroke cycle.

As described above, it has been desired to apply the technique used for automobiles to the engine unit used in straddled vehicles including the motorcycle 1. This is the background to the development of this embodiment. It was found that, if the technique for automobiles is applied as it is to the engine unit widely used in straddled vehicles, a disadvantage may be caused. That is, there is a possibility that the amount of fuel vapor introduced from the canister to the combustion chamber varies widely, which makes the control of the engine difficult. Specifically, it was found that, in the engine unit in which the creation of the smaller and larger depressions is repeated on a four-stroke basis, the amount of fuel vapor introduced from the canister to the combustion chamber may vary greatly, and this possibly makes the control of the engine difficult. Then, the present embodiment has been developed for the purpose of eliminating or reducing the difficulty in the control of the engine when fuel vapor is actively introduced from the canister into the combustion chamber in the engine unit in which the creation of the smaller and larger depressions is repeated on a four-stroke basis.

A preferred embodiment of the present teaching has been described above. It should be noted that the present teaching is not limited to the above-described embodiment, and various changes can be made within the scope of the claims. Furthermore, the above-described embodiment and modifications described below may be used in combination as needed. It is noted that the term "preferable" used herein is non-exclusive and means "preferable but not limited to". It is noted that the term "may..." used herein is non-exclusive and means "may..., but not limited to".

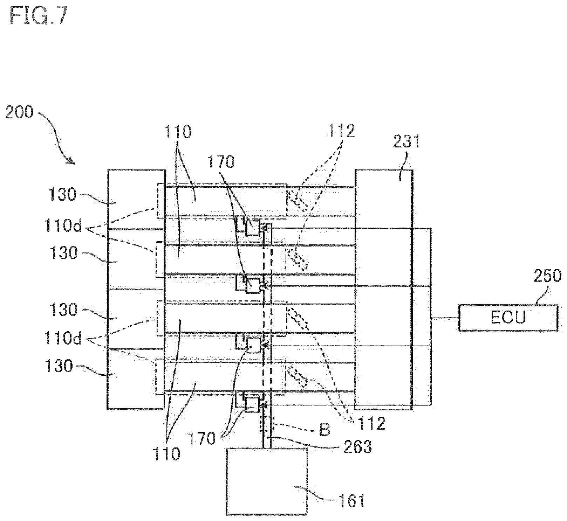

In the above-described embodiment, the present teaching is applied to the single-cylinder engine unit 100. Alternatively, the present teaching may be applied to a multi-cylinder engine unit 200 shown in FIG. 7. The engine unit 200 includes four engines 130, four intake passage members 110, a canister 161, an ECU 250, and a communication passage member 263. The four intake passage members 110 are respectively connected to the four engines 130. Fuel vapor is introduced from the canister 161 to the intake passage members 110 through the communication passage member 263. An air cleaner 231 is configured to clean air. Cleaned air is supplied to the four intake passage members 110. A throttle valve 112 is individually provided in each of the intake passage members 110. That is to say, the engine unit 200 is the engine unit with individual throttle bodies. Also in this engine unit with the individual throttle bodies, pressure in each downstream intake passage portion 110d that is downstream of the corresponding throttle valve 112 varies in the same manner as above. That is, pressure in each downstream intake passage portion 110d varies in the pressure-variation manner such that: a smaller depression having a smaller difference from atmospheric pressure and a larger depression having a larger difference from atmospheric pressure are created in each four-stroke cycle; and the creation of the smaller and larger depressions is repeated on a four-stroke basis. Because of the above structure, the communication passage member 263 has four branched portions respectively connected to the downstream intake passage portions 110d. A flow regulating valve 170 is provided to each of the branched portions. Furthermore, an intake pressure sensor and a throttle position sensor are provided for each of the downstream intake passage portions 110d, individually. An rpm sensor is provided for each of the engines 130, individually.

The ECU 250 controls each of the four flow regulating valves 170 on the basis of the four-stroke-based manner of the pressure variation in the downstream intake passage portion 110d corresponding thereto. The control method for each flow regulating valve 170 is similar to that of the ECU 150. The four-stroke-based manner of the pressure variation is obtained based on results obtained by the sensors. Specifically, the results are obtained by the intake pressure sensor and the throttle position sensor provided for each of the downstream intake passage portions 110d individually, and the rpm sensor provided for each of the engines 130 individually. Thus, the amount of introduced fuel vapor is properly adjustable on the basis of the four-stroke-based manner of the pressure variation when fuel vapor is actively introduced from the canister 161 into the combustion chamber 130a of each engine 130. In this modification, the engine unit 200 has four cylinders. It should be noted that the present teaching may be applied to a two-cylinder, three-cylinder, or five or more-cylinder engine unit.

A further modification of the modification of FIG. 7 is also possible. In this further modification, a single flow regulating valve 170 is provided at a position indicated with a broken line B in FIG. 7, instead of the four flow regulating valves 170. In this modification, the ECU 250 controls the opening degree of the single flow regulating valve 170 on the basis of the detection result of the pressure in each of the four downstream intake passage portions 110d. For example, suppose that the stroke phases of the four engines 130 are shifted from one another by a crank angle of 180 degrees each. In this case, the period corresponding to a four-stroke cycle may be divided into four sections, and the opening degree of the flow regulating valve 170 may be changed in each of the four sections.

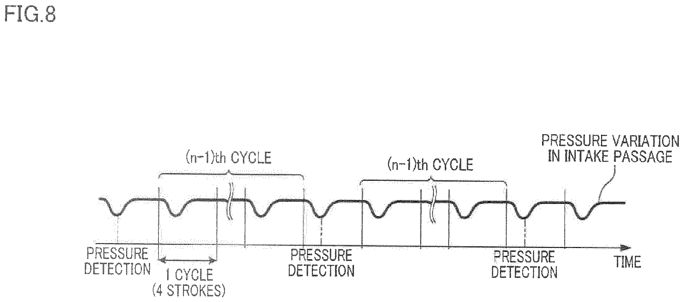

In the above-described embodiment, the opening degree of the flow regulating valve 170 is controlled based on the pressure in the downstream intake passage 110x detected in each four-stroke cycle. The frequency of detection and the control method may be altered from those in the above-described embodiment. For example, FIG. 8 shows a modification in which the pressure is detected on a n-cycle basis, i.e., in each span of n cycles. Herein, n is a natural number equal to or greater than 2 (n ≥ 2). In this modification, the pressure in the downstream intake passage 110x is not detected during the period from the first cycle to the (n-1)th cycle in each n-cycle span. The pressure in the downstream intake passage 110x is detected at a specific timing or at multiple timings in the nth cycle in each n-cycle span, to be used as a value(s) indicating the four-stroke-based manner of the pressure variation. The opening degree of the flow regulating valve 170 is controlled based on the detected pressure value(s). The above control is repeated on a n-cycle basis. Thus, the flow regulating valve 170 is controlled properly on the basis of the four-stroke-based manner of the pressure variation for each n-cycle span.

The above modification may be further arranged as follows: the pressure is detected at a specific timing in each of two or more cycles in each n-cycle span, and a value obtained by calculating the detected pressure values may be used as the pressure value indicating the four-stroke-based manner of the pressure variation for each n-cycle span. For example, the pressure may be detected at a specific timing in each of two or more four-stroke cycles in each n-cycle span, and the average of the detected pressure values may be calculated. Then, the average may be used for the control of the flow regulating valve 170, as a value indicating the four-stroke-based manner of the pressure variation for each n-cycle span.

Furthermore, in the above-described embodiment, the ECU 150 controls the flow regulating valve 170 so as to satisfy the conditions shown in FIG. 5A and FIG. 5B. However, the ECU may control the flow regulating valve 170 so as to satisfy conditions different from those shown in FIG. 5A and FIG. 5B.

Furthermore, instead of the flow regulating valve 170 used in the above-described embodiment, a variety of valves different in structure to narrow the passage may be used. Furthermore, the valve configured to change the amount of fuel vapor in the present teaching may change the flow rate discretely, or may change the flow rate continuously.

In this Specification, "to control the opening degree of the valve on the basis of the four-stroke-based manner of the pressure variation included in the pressure-variation manner in which the creation of the smaller and larger depressions is repeated on a four-stroke basis" means that the control is made as follows. As described in the above embodiment by way of example, the manner of the pressure variation changes as the rpm of the engine 130 changes, for example. The manner of the pressure variation is represented by the shape of a curve indicating pressure variation, such as the curves P1 and P2 in FIG. 4. Each of the curves P1 and P2 forms a valley in each four-stroke cycle. The valley shows the depression in pressure. As shown in FIG. 6, the depression valley in each four-stroke cycle becomes deeper as the rpm of the engine 130 increases. Now, "to control the opening degree of the valve on the basis of the four-stroke-based manner of the pressure variation included in the pressure-variation manner in which the creation of the smaller and larger depressions is repeated on a four-stroke basis" includes the control of the opening degree of the valve in relation to a change in the above-described four-stroke-based manner of the pressure variation. For example, in the above-described embodiment, the control is made as follows. As the rpm of the engine 130 increases, the four-stroke-based manner of the pressure variation changes. Specifically, the shape of the valley in the curve indicating the pressure variation changes with the increase in the rpm. In response to this change, control is made so as to increase the opening degree of the flow regulating valve 170.

In the above control, the opening degree of the valve may be controlled based on a pressure value derived from the detection result(s) of a sensor/sensors, or may be controlled based on a pressure value directly obtained by a sensor. For example, in the above-described embodiment, the opening degree of the flow regulating valve 170 is controlled based on a pressure in the downstream intake passage 110x derived from detection results for the rpm of the engine 130 and the throttle opening angle of the throttle valve 112. However, the opening degree of the flow regulating valve 170 may be controlled based on a pressure in the downstream intake passage 110x, which is directly obtained from the detection result obtained by the intake pressure sensor 151.

Furthermore, the control of the opening degree of the valve does not have to be performed directly based on the value of the pressure. For example, the valve may be controlled without deriving the value of the pressure in the downstream intake passage 110x from values for the rpm of the engine 130 and for the throttle opening angle of the throttle valve 112, and without directly obtaining the value of the pressure in the downstream intake passage 110x from the detection result obtained by the intake pressure sensor 151. For example, the valve may be controlled based on information stored in the storage unit. Specifically, the storage unit stores therein: information for the rpm of the engine 130 and the throttle opening angle of the throttle valve 112; and information for the opening degree of the flow regulating valve 170, and the pieces of information are associated with each other. Based on the values for the rpm of the engine 130 and the throttle opening angle of the throttle valve 112, a piece of information for the opening degree of the flow regulating valve 170 associated therewith is obtained from the storage unit. The valve may be controlled based on the obtained piece of information.

In this Specification, "the opening degree of the valve in the open state is adjustable" means that the opening degree of the valve in the open state is adjustable to two or more levels. This means that the number of levels to which the opening degree of the valve is adjustable is three or more, including the level of the opening degree of zero, at which the valve closes the communication passage to prevent communication of air between the canister and the intake passage. The valve may be configured so that its opening degree changes discretely, or may be configured so that its opening degree changes continuously.

In addition to the above, "creation of the smaller and larger depressions is repeated on a four-stroke basis" herein indicates that two depressions are present in each four-stroke cycle, and one of the depressions has a difference from atmospheric pressure larger than that of the other's. In other words, there are two depressions in each four-stroke cycle, the differences of which from atmospheric pressure are different from each other.

It should be noted that the straddled vehicle in the present teaching is not limited to the above-described motorcycle 1. The straddled vehicle may be any vehicle which a rider straddles to ride the vehicle. The straddled vehicle may be any other type of two-wheeled motor vehicle, such as an off-road motorcycle, a scooter, and a moped. In addition to the above, the straddled vehicle in the present teaching encompasses a tricycle and a four-wheeler (all terrain vehicle (ATV)).

### Reference Signs List

1: motorcycle
14: fuel tank
100: engine unit
110: intake passage member
110a: intake passage
112: throttle valve
120: exhaust passage member
120a: exhaust passage
130: engine
130a: combustion chamber
141: intake valve
142: exhaust valve
151: intake pressure sensor
152: throttle position sensor
153: rpm sensor
161: canister
163: communication passage member
163a: communication passage
170: flow regulating valve
200: engine unit
263: communication passage member

## Claims

1. A single-cylinder or multi-cylinder four-stroke engine unit (100, 200) comprising:
a combustion chamber (130a); an intake passage member (110) through which air is introduced into the combustion chamber (130a); and a throttle valve (112) provided in an intermediate portion of the intake passage member (110), the combustion chamber (130a), the intake passage member (110), and the throttle valve (112) being provided for each cylinder (131), pressure in a downstream intake passage portion (110d) of the intake passage member (110) that is downstream of the throttle valve (112) varying in a pressure-variation manner such that: a smaller depression having a smaller difference from atmospheric pressure and a larger depression having a larger difference from atmospheric pressure are created in each cycle constituted by four strokes; and the creation of the smaller and larger depressions is performed in each four-stroke cycle, the engine unit (100, 200) further comprising:
a canister (161) connected to a fuel tank (14) and accommodating therein an adsorbent configured to adsorb fuel vapor contained in incoming air from the fuel tank (14);
a communication passage member (163, 263) configured to establish communication between an inside of the canister (161) and the downstream intake passage portion (110d) for each cylinder (131);
a valve (170) capable of being in an open state in which the valve (170) allows communication of air between an inside of the canister (161) and the intake passage member (110) through the communication passage member (163,263),
**characterised in that**
an opening degree of the valve (170) in the open state being adjustable; and
a controller (150) configured to control the opening degree of the valve (170), whereby the controller (150) is configured to control the valve (170) in such a manner that after the controller (150) keeps the opening degree of the valve (170) in the open state at a predetermined level over a plurality of cycles, the controller (150) changes the opening degree of the valve (170) in the open state, on a basis of a one-cycle-based manner of pressure variation in the downstream intake passage portion (110d), said pressure variation included in the pressure-variation manner in which the creation of the smaller and larger depressions is performed in each four-stroke cycle.

2. The engine unit (100, 200) according to claim 1, wherein the controller (150) is configured to control the opening degree of the valve (170) in the open state on a basis of the one-cycle-based manner of the pressure variation for each n-cycle span, where n is a natural number.

3. The engine unit (100, 200) according to claim 2, further comprising
a sensor (151) configured to detect negative pressure in the downstream intake passage portion (110d), wherein
the controller (150) is configured to control the opening degree of the valve (170) in the open state on a basis of a detection result obtained by the sensor (151) in each of one or more cycles included in the n-cycle span, the detection result functioning to indicate the one-cycle-based manner of the pressure variation for each n-cycle span.

4. The engine unit (100, 200) according to any one of claims 1 to 3, further comprising a sensor (151) configured to detect negative pressure in the downstream intake passage portion (110d), wherein
the controller (150) is configured to control the opening degree of the valve (170) in the open state on a basis of a detection result obtained by the sensor (151), the detection result relating to the one-cycle-based manner of the pressure variation.

5. The engine unit (100, 200) according to any one of claims 1 to 4, wherein the controller (150) is configured to control the valve (170) so that when a combustion chamber-introduction air amount, which is an amount of air introduced from the downstream intake passage portion (110d) into the combustion chamber (130a), is equal to or lower than a predetermined value, a ratio of an amount of fuel vapor introduced from the communication passage member (163, 263) to the downstream intake passage portion (110d) to the combustion chamber-introduction air amount increases with an increase in the combustion chamber-introduction air amount.

6. A straddled vehicle (1) comprising:
the engine unit (100, 200) recited in any one of claims 1 to 5;
a vehicle body frame (4) supporting the engine unit (100, 200);
a rider seat (11);
handlebars (9) provided frontward of the rider seat (11); and
a fuel tank (14) connected to the canister (161) included in the engine unit (100, 200).

## Patentansprüche

1. Eine Viertakt-Motoreinheit (100, 200) mit einem einzelnen Zylinder oder mehreren Zylindern, die folgende Merkmale aufweist:
eine Verbrennungskammer (130a); ein Einlassdurchgangsbauglied (110), durch das Luft in die Verbrennungskammer (130a) eingeführt wird; und ein Drosselventil (112), das in einem Zwischenabschnitt des Einlassdurchgangsbauglieds (110) bereitgestellt ist, wobei die Verbrennungskammer (130a), das Einlassdurchgangsbauglied (110) und das Drosselventil (112) für jeden Zylinder (131) bereitgestellt sind, wobei ein Druck in einem nachgelagerten Einlassdurchgangsabschnitt (110d) des Einlassdurchgangsbauglieds (110), der nachgelagert zu dem Drosselventil (112) ist, auf eine druckvariable Weise derart variiert, dass: ein kleinerer Unterdruck mit einer kleineren Differenz von dem atmosphärischen Druck und ein größerer Unterdruck mit einer größeren Differenz von dem atmosphärischen Druck in jedem Zyklus, der aus vier Takten gebildet ist, erzeugt werden und die Erzeugung des kleineren und des größeren Unterdrucks in jedem Viertaktzyklus durchgeführt wird, wobei die Motoreinheit (100, 200) ferner folgende Merkmale aufweist:
einen Kanister (161), der mit einem Kraftstofftank (14) verbunden ist und in demselben ein Adsorptionsmittel aufnimmt, das dazu konfiguriert ist, Kraftstoffdampf zu adsorbieren, der in Zuluft von dem Kraftstofftank (14) enthalten ist;
ein Kommunikationsdurchgangsbauglied (163, 263), das dazu konfiguriert ist, eine Kommunikation zwischen einem Inneren des Kanisters (161) und dem nachgelagerten Einlassdurchgangsabschnitt (110d) für jeden Zylinder (131) einzurichten;
ein Ventil (170), das in der Lage ist, in einem offenen Zustand zu sein, in dem das Ventil (170) eine Kommunikation von Luft zwischen einem Inneren des Kanisters (161) und dem Einlassdurchgangsbauglied (110) durch das Kommunikationsdurchgangsbauglied (163, 263) hindurch zulässt,
**dadurch gekennzeichnet, dass** ein Öffnungsgrad des Ventils (170) in dem offenen Zustand einstellbar ist; und
eine Steuereinrichtung (150), die dazu konfiguriert ist, den Öffnungsgrad des Ventils (170) zu steuern,
wodurch die Steuereinrichtung (150) dazu konfiguriert ist, das Ventil (170) derart zu steuern, dass, nachdem die Steuereinrichtung (150) den Öffnungsgrad des Ventils (170) in dem offenen Zustand über eine Mehrzahl von Zyklen auf einem vorbestimmten Pegel hält, die Steuereinrichtung (150) den Öffnungsgrad des Ventils (170) in dem offenen Zustand auf Basis einer Ein-Zyklus-basierten Weise der Druckänderung in dem nachgelagerten Einlassdurchgangsabschnitt (110d) ändert, wobei die Druckänderung in der druckvariablen Weise beinhaltet ist, bei der die Erzeugung des kleineren und größeren Unterdrucks in jedem Viertaktzyklus durchgeführt wird.

2. Die Motoreinheit (100, 200) gemäß Anspruch 1, wobei die Steuereinrichtung (150) dazu konfiguriert ist, den Öffnungsgrad des Ventils (170) in dem offenen Zustand auf Basis der Ein-Zyklus-basierten Weise der Druckänderung für jede n-Zyklus-Spanne zu steuern, wobei n eine natürliche Zahl ist.

3. Die Motoreinheit (100, 200) gemäß Anspruch 2, die ferner folgendes Merkmal aufweist:
einen Sensor (151), der dazu konfiguriert ist, negativen Druck in dem nachgelagerten Einlassdurchgangsabschnitt (110d) zu erfassen, wobei
die Steuereinrichtung (150) dazu konfiguriert ist, den Öffnungsgrad des Ventils (170) in dem offenen Zustand auf Basis eines Erfassungsergebnisses zu steuern, das seitens des Sensors (151) in jedem von einem oder mehreren Zyklen erhalten wird, die in der n-Zyklus-Spanne beinhaltet sind, wobei das Erfassungsergebnis dazu dient, die Ein-Zyklus-basierte Weise der Druckänderung für jede n-Zyklus-Spanne anzugeben.

4. Die Motoreinheit (100, 200) gemäß einem der Ansprüche 1 bis 3, die ferner folgendes Merkmal aufweist:
einen Sensor (151), der dazu konfiguriert ist, negativen Druck in dem nachgelagerten Einlassdurchgangsabschnitt (110d) zu erfassen, wobei
die Steuereinrichtung (150) dazu konfiguriert ist, den Öffnungsgrad des Ventils (170) in dem offenen Zustand auf Basis eines Erfassungsergebnisses zu steuern, das seitens des Sensors (151) erhalten wird, wobei das Erfassungsergebnis sich auf die Ein-Zyklus-basierte Weise der Druckänderung bezieht.

5. Die Motoreinheit (100, 200) gemäß einem der Ansprüche 1 bis 4, wobei die Steuereinrichtung (150) dazu konfiguriert ist, das Ventil (170) so zu steuern, dass, wenn eine Verbrennungskammer-Einführungs-Luftmenge, die eine Menge von Luft ist, die von dem nachgelagerten Einlassdurchgangsabschnitt (110d) in die Verbrennungskammer (130a) eingeführt wird, gleich oder kleiner als ein vorbestimmter Wert ist, ein Verhältnis zwischen einer Menge von Kraftstoffdampf, die von dem Kommunikationsdurchgangsbauglied (163, 263) in den nachgelagerten Einlassdurchgangsabschnitt (110d) eingeführt wird, und der Verbrennungskammer-Einführungs-Luftmenge mit Zunahme der Verbrennungskammer-Einführungs-Luftmenge zunimmt.

6. Ein rittlings zu fahrendes Fahrzeug (1), das folgende Merkmale aufweist:
die Motoreinheit (100, 200), die in einem der Ansprüche 1 bis 5 zitiert wird;
einen Fahrzeugkörperrahmen (4), der die Motoreinheit (100, 200) trägt;
einen Fahrersitz (11);
Handgriffe (9), die in Vorwärtsrichtung vor dem Fahrersitz (11) bereitgestellt sind; und
einen Kraftstofftank (14), der mit dem Kanister (161) verbunden ist, der in der Motoreinheit (100, 200) beinhaltet ist.

## Revendications

1. Unité de moteur à quatre temps monocylindre ou multicylindre (100, 200) comprenant:
une chambre de combustion (130a); un élément de passage d'admission (110) à travers lequel de l'air est introduit dans la chambre de combustion (130a); et une soupape d'étranglement (112) prévue dans une partie intermédiaire de l'élément de passage d'admission (110), la chambre de combustion (130a), l'élément de passage d'admission (110) et la soupape d'étranglement (112) étant prévus pour chaque cylindre (131), la pression dans une partie de passage d'admission aval (110d) de l'élément de passage d'admission (110) qui se trouve en aval de la soupape d'étranglement (112) variant de manière à faire varier la pression de sorte qu'une dépression inférieure présentant une différence inférieure par rapport à la pression atmosphérique et une dépression supérieure présentant une différence supérieure par rapport à la pression atmosphérique soient créées dans chaque cycle constitué de quatre temps; et la création des dépressions inférieure et supérieure est réalisée dans chaque cycle à quatre temps, l'unité de moteur (100, 200) comprenant par ailleurs:
une boîte (161) connectée à un réservoir de carburant (14) et y recevant un adsorbant configuré pour adsorber la vapeur de carburant contenue dans l'air entrant du réservoir de carburant (14);
un élément de passage de communication (163, 263) configuré pour établir une communication entre l'intérieur de la boîte (161) et la partie de passage d'admission aval (110d) pour chaque cylindre (131);
une soupape (170) à même de se trouver dans un état ouvert dans lequel la soupape (170) permet la communication d'air entre l'intérieur de la boîte (161) et l'élément de passage d'admission (110) à travers l'élément de passage de communication (163, 263),
**caractérisée par le fait que**
un degré d'ouverture de la soupape (170) à l'état ouvert est réglable; et
un moyen de commande (150) est configuré pour commander le degré d'ouverture de la soupape (170),
dans laquelle
le moyen de commande (150) est configuré pour commander la soupape (170) de sorte qu'après que le moyen de commande (150) maintienne le degré d'ouverture de la soupape (170) à l'état ouvert à un niveau prédéterminé sur plusieurs cycles, le moyen de commande (150) modifie le degré d'ouverture de la soupape (170) à l'état ouvert, sur base de la manière dont varie la pression par cycle dans la partie de passage d'admission aval (110d), ladite variation de pression étant comprise dans la manière à faire varier la pression selon laquelle est réalisée la création des dépressions inférieure et supérieure dans chaque cycle de quatre temps.

2. Unité de moteur (100, 200) selon la revendication 1, dans laquelle le moyen de commande (150) est configuré pour commander le degré d'ouverture de la soupape (170) à l'état ouvert sur base de la manière dont varie la pression par cycle pour chaque plage de n cycles, où n est un nombre naturel.

3. Unité de moteur (100, 200) selon la revendication 2, comprenant par ailleurs un capteur (151) configuré pour détecter une pression négative dans la partie de passage d'admission aval (110d), dans laquelle
le moyen de commande (150) est configuré pour commander le degré d'ouverture de la soupape (170) à l'état ouvert sur base d'un résultat de détection obtenu par le capteur (151) dans chacun parmi un ou plusieurs cycles compris dans l'intervalle de n cycles, le résultat de la détection fonctionnant pour indiquer la manière dont varie la pression par cycle pour chaque plage de n cycles.

4. Unité de moteur (100, 200) selon l'une quelconque des revendications 1 à 3, comprenant par ailleurs
un capteur (151) configuré pour détecter une pression négative dans la partie de passage d'admission aval (110d),
dans laquelle
le moyen de commande (150) est configuré pour commander le degré d'ouverture de la soupape (170) à l'état ouvert sur base d'un résultat de détection obtenu par le capteur (151), le résultat de la détection étant relatif à la manière dont varie la pression par cycle.

5. Unité de moteur (100, 200) selon l'une quelconque des revendications 1 à 4, dans laquelle le moyen de commande (150) est configuré pour commander la soupape (170) de sorte que, lorsqu'une quantité d'air d'introduction dans la chambre de combustion, qui est une quantité d'air introduit de la partie de passage d'admission aval (110d) dans la chambre de combustion (130a), est égale ou inférieure à une valeur prédéterminée, un rapport entre une quantité de vapeur de carburant introduite de l'élément de passage de communication (163, 263) dans la partie de passage d'admission aval (110d) et la quantité d'air d'introduction dans la chambre de combustion augmente au fur et à mesure qu'augmente la quantité d'air d'introduction dans la chambre de combustion.

6. Véhicule à selle (1) comprenant:
l'unité de moteur (100, 200) selon l'une quelconque des revendications 1 à 5;
un châssis de carrosserie de véhicule (4) supportant l'unité de moteur (100, 200);
un siège de conducteur (11);
un guidon (9) prévu à l'avant du siège de conducteur (11); et
un réservoir de carburant (14) connecté à la boîte (161) incluse dans l'unité de moteur (100, 200).
